(19) Europäisches Patentamt
European Patent Office
Office européen des brevets

(11) **EP 3 255 166 A1**

(12) **EUROPEAN PATENT APPLICATION**
published in accordance with Art. 153(4) EPC

(43) Date of publication:
**13.12.2017 Bulletin 2017/50**

(51) Int Cl.:
***C22C 38/00*** (2006.01)   ***B23K 35/30*** (2006.01)
***C22C 38/48*** (2006.01)   ***C22C 38/54*** (2006.01)

(21) Application number: **16746507.9**

(22) Date of filing: **28.01.2016**

(86) International application number:
**PCT/JP2016/052468**

(87) International publication number:
**WO 2016/125676 (11.08.2016 Gazette 2016/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.02.2015 JP 2015018868**

(71) Applicant: **Kabushiki Kaisha Kobe Seiko Sho (Kobe Steel, Ltd.)**
**Kobe-shi, Hyogo 651-8585 (JP)**

(72) Inventors:
• **NAKO Hidenori**
  **Kobe-shi,**
  **Hyogo 651-2271 (JP)**
• **NAMBA Shigenobu**
  **Kobe-shi,**
  **Hyogo 651-2271 (JP)**

• **OKAZAKI Yoshitomi**
  **Kobe-shi,**
  **Hyogo 651-2271 (JP)**
• **YAMASHITA Ken**
  **100-1, Miyamae,**
  **Fujisawa-shi,**
  **Kanagawa 251-8551 (JP)**
• **TANIGUCHI Genichi**
  **100-1, Miyamae,**
  **Fujisawa-shi,**
  **Kanagawa 251-8551 (JP)**
• **BANNO Yasutaka**
  **100-1, Miyamae,**
  **Fujisawa-shi,**
  **Kanagawa 251-8551 (JP)**

(74) Representative: **Müller-Boré & Partner**
**Patentanwälte PartG mbB**
**Friedenheimer Brücke 21**
**80639 München (DE)**

(54) **WELDED METAL AND WELDED STRUCTURE**

(57)     The welding metal of the present invention has a composition that includes specific amounts of C, Si, Mn, Ni, Cr, Mo, V, Nb, N, and O, with the remainder being Fe and unavoidable impurities, the total concentration of Mn and Ni being 1.0 mass% or less, and a value given by $10 \times [P] + 5 \times [Sb] + 4 \times [Sn] + [As]) \times 100$ being more than 0 to 15.

**EP 3 255 166 A1**

**Description**

Technical Field

The present invention relates to a weld metal and a welded structure.

Background Art

High-Cr (chromium) steel weld metals are in extensive practical use in boiler tubes or pipes for ultra supercritical coal-fired thermal power generation which heat up to high temperatures of 500°C or more and 600°C or less, because of the excellent heat resistance thereof. Such high-Cr steel weld metals are required to have various properties including crack resistance, strength, and toughness as well as high-temperature creep rupture properties.
To such high-Cr steel weld metals, shielded metal arc welding (SMAW), gas tungsten arc welding (GTAW), submerged arc welding (SAW), gas metal arc welding (GMAW), flux cored arc welding (FCAW), and the like are applied. Post weld heat treatments (PWHT) are preformed in order to remove the stress remaining in the weld metals.
The effect of the PWHT depends on holding period and holding temperature. A holding period and a holding temperature in a PWHT are generally determined on the basis of the Larson-Miller parameter (LMP) shown by the following formula, wherein T (°C) is SR (stress relief) annealing temperature and t (hour) is SR annealing period. For example, by elevating the holding temperature, the same effect of the PWHT is obtained with a shorter holding period.

$$LMP = (T+273) \times (20+\log t)$$

In recent years, a reduction in holding period during PWHT is desired from the standpoint of construction efficiency. However, elevating the holding temperature in order to shorten the holding period is apt to result in the formation of ferrite bands in the weld metal. The ferrite bands are coarse band-shaped ferrite structures which have been locally yielded and are observed after PWHT, and it is known that the ferrite bands adversely affect the creep rupture properties and toughness. Furthermore, in high-Cr steel weld metals, which contain large amount of Cr which is a ferrite-stabilizing element, the δ (delta) ferrite structures which have been yielded at high temperatures during welding are prone to remain after completion of the welding. The δ ferrite is coarse structures observed in the as-welded steel which has not undergone a PWHT, and adversely affects the creep rupture properties and toughness like the ferrite bands.
Although creep rupture properties and toughness are generally evaluated by examining test specimens taken from a specific portion of the weld metal, satisfactory values are shown when the portion contains neither ferrite bands nor δ ferrite. In weld metals used in actual construction, however, there are cases where the ferrite bands and δ ferrite which have been locally yielded cause fracture or breakage. It is therefore necessary to inhibit the formation of ferrite bands and δ ferrite over the whole weld metal, in order to ensure safety. Consequently, there is a growing desire for a high-Cr steel weld metal which, even when having undergone a PWHT performed at a high holding temperature, is inhibited from containing ferrite bands or δ ferrite, from the standpoint of shortening the holding period in PWHT while ensuring creep rupture properties and toughness on a high level.
In order to meet the desire, there was a proposal of a 2.25Cr steel weld metal in which the formation of ferrite bands is inhibited by diminishing fine MC-type carbides among the carbides of metal M with carbon C, which precipitate within the matrix grains during PWHT, and by increasing the amount of fine $M_2C$-type carbides thereamong (see JP-A-2007-290016). However, the holding temperature in PWHT that is supposed for this 2.25Cr steel weld metal is 690°C, which is not regarded as a sufficiently high holding temperature and is ineffective in sufficiently shortening the holding period in PWHT.
Meanwhile, a welding material has been proposed in order to meet the desire, the welding material including a welding wire in which the components have been specified, thereby inhibiting the formation of δ ferrite in high-Cr steel weld metals (see JP-A-H08-187592). However, this welding material is for use in TIG welding (tungsten inert gas welding) and has a drawback in that the construction efficiency is low. In addition, the holding temperature in PWHT that is supposed for this welding material is 740°C, which also is not regarded as a sufficiently high holding temperature and is ineffective in sufficiently shortening the holding period in PWHT.
Moreover, in order to meet the desire, there was a proposal of a covered electrode for use in shielded metal arc welding with an excellent construction efficiency, in which the contents of Cr, Mo (molybdenum), W (tungsten), and Cu (copper) have been specified, thereby inhibiting the formation of δ ferrite in weld metals (see JP-A-H06-238480). However, the holding temperature in PWHT which is supposed for this covered electrode is 740°C.
Furthermore, in order to meet the desire, there was a proposal of a covered electrode in which Co (cobalt) is contained in a certain amount, thereby inhibiting the formation of δ ferrite in weld metals (see JP-A-H07-268562). However, since this covered electrode contains a certain amount of Co, which promotes the formation of ferrite bands, this covered electrode cannot be expected to have the effect of inhibiting the formation of ferrite bands.

Prior Art Documents

Patent Documents

Patent Document 1: JP-A-2007-290016
Patent Document 2: JP-A-H08-187592
Patent Document 3: JP-A-H06-238480
Patent Document 4: JP-A-H07-268562

Summary of the Invention

Technical Problems

An object of the present invention, which has been achieved under the circumstances described above, is to provide a weld metal and a welded structure, which are capable of attaining both creep rupture properties and toughness on a high level while attaining a reduction in holding period in PWHT.

Solution to Problems

The present inventors diligently made investigations and, as a result, the present inventors thought that since ferrite bands are yielded by a reverse transformation during PWHTs, an effective measure for inhibiting ferrite bands from being yielded in a PWHT performed at a higher temperature is to elevate the reverse transformation temperature. The present inventors have thus found that the formation of ferrite bands can be inhibited by reducing the total concentration of Ni (nickel) and Mn (manganese), which are elements that lower the reverse transformation temperature. The present inventors have further found that since P (phosphorus), Sb (antimony), Sn (tin), and As (arsenic) are each an unavoidable impurity and are elements causative of a decrease in toughness, the influence thereof on toughness decrease can be regulated by controlling the content of each of these elements on the basis of the parameter X value which is determined using, as variables, the proportions by mass of these elements and which was proposed in Robert Bruscato, The Welding Journal, vol.49 (1970), No.4, 148s-156s.

That is, the present invention made for solving the above problems is directed to a weld metal having a composition, including: C (carbon): 0.03 mass% or more and 0.16 mass% or less; Si (silicon): 0.10 mass% or more and 0.50 mass% or less; Mn (manganese): 0.10 mass% or more and 0.90 mass% or less; Ni (nickel): 0.02 mass% or more and 0.70 mass% or less; Cr (chromium): 7.0 mass% or more and 9.5 mass% or less; Mo (molybdenum): 0.80 mass% or more and 1.20 mass% or less; V (vanadium): 0.05 mass% or more and 0.50 mass% or less; Nb (niobium): 0.010 mass% or more and 0.070 mass% or less; N (nitrogen): 0.010 mass% or more and 0.080 mass% or less; and O (oxygen): more than 0 mass% and 0.10 mass% or less, with the remainder being Fe (iron) and unavoidable impurities, wherein a total concentration of Mn and Ni is 1.0 mass% or less, and an X value defined by the following formula (1) is larger than 0 and 15 or less:

$$X \text{ value} = (10 \times [P] + 5 \times [Sb] + 4 \times [Sn] + [As]) \times 100 \qquad (1)$$

wherein [P], [Sb], [Sn], and [As] are concentrations (mass%) of P (phosphorus), Sb (antimony), Sn (tin), and As (arsenic), as the unavoidable impurities, respectively.

Since the contents of the components of this weld metal are regulated so as to be within the ranges shown above, creep rupture properties and toughness are obtained on a high level. Namely, since the total concentration of Mn and Ni in this weld metal is not higher than the upper limit shown above, the reverse transformation temperature can be lowered to inhibit the formation of ferrite bands. In this connection, Mn and Ni are austenite-stabilizing elements and, hence, reducing the total concentration of these elements renders δ ferrite relatively stable and promotes the formation of δ ferrite during welding. This effect of promoting the formation of δ ferrite is lessened in this weld metal by regulating the content of Cr which is a ferrite-stabilizing element, so as to be not higher than the upper limit shown above. In this connection, reducing the content of Cr reduces the content of the Cr-based carbide $M_{23}C_6$ (where M represents a carbide-forming element), which is an obstacle to dislocation motions at high temperatures under stress, resulting in a decrease in creep rupture property.

This problem has been solved in this weld metal by regulating the content of Ni so as to be not higher than the upper limit, to thereby reduce the rate at which the number of particles of MX precipitates decreases at high temperatures under stress. Thus, the decrease in creep rupture property is inhibited by the MX precipitates. The term "MX precipitates" inclusively means NaCl-type compounds, such as carbides, nitrides, and carbonitrides, which precipitate during cooling after welding. Namely, the MX precipitates function as an obstacle to dislocation motions to improve the creep rupture properties, like the case of $M_{23}C_6$. However, since the MX precipitates are far finer than $M_{23}C_6$, the MX precipitates readily coarsen at high temperatures under stress to decrease in the number of particles thereof and are thus rapidly deprived of the effect of inhibiting dislocation motions.

This problem has been solved in this weld metal by reducing the content of Ni to thereby lower the rate at which the number of particles of MX precipitates decreases at high temperatures under stress. Thus, the effect of inhibiting dislocation motions by the MX precipitates is maintained over a long period. This weld metal has advantages in that the reverse transformation temperature is lowered to inhibit the formation of δ ferrite and ferrite bands and enable a PWHT to be performed at a higher holding temperature, thereby shortening the holding period in the PWHT and enabling the weld metal to have both creep rupture properties and toughness on a high level.

In addition, since the X value, which is an index to the influence on toughness decrease and which is determined using as variables the proportions by mass of elements contained as unavoidable impurities, is regulated so as to be not larger than the upper limit, this weld metal is inhibited from being adversely affected by impurities and given toughness can be ensured.

The upper limit of the concentration of O is preferably 0.005 mass%. By regulating the O concentration so as to be not higher than the upper limit, coarse oxides can be remarkably inhibited from increasing in number and the toughness is enhanced further.

In a case where the concentration of V is expressed by [V] and the concentration of compound-type V is expressed by [insol.V], it is desirable that the Y value defined by the following formula (2) should be 10 or less. The present inventors have found that the decrease in the number of MX particles which occurs at high temperatures under stress is affected by the concentration of V which is a main constituent element of the MX precipitates. Specifically, the higher the concentration of the V which constitutes the MX precipitates and the lower the concentration of the V which remains in the matrix without constituting the MX precipitates, the more stably the MX particles are present. By regulating the Y value so as to be not larger than the upper limit from that standpoint, the decrease in the number of MX particles which occurs at high temperatures under stress can be inhibited reliably and excellent creep rupture properties can be obtained more reliably. The "concentration of V" is the proportion by mass of the V contained in the whole weld metal, while the "concentration of compound-type V" is the proportion by mass of the V contained in MX precipitates to the whole weld metal.

$$Y \text{ value} = ([V] - [insol.V]) / [insol.V] \qquad (2)$$

It is desirable that the weld metal should further contain at least one component selected from the group consisting of Co (cobalt): more than 0 mass% and 0.5 mass% or less; W (tungsten): more than 0 mass% and 0.5 mass% or less; Ti (titanium): more than 0 mass% and 0.030 mass% or less; and B (boron): more than 0 mass% and 0.0030 mass% or less. In a case where the weld metal thus contains the at least one component, creep rupture properties and toughness can be more reliably obtained on a high level without lowering the toughness.

It is desirable that the weld metal should further contain at least one component selected from the group consisting of Cu (copper): more than 0 mass% and 0.23 mass% or less; and Al (aluminum): more than 0 mass% and 0.050 mass% or less. In a case where the weld metal thus contains the at least one component, the toughness can be more reliably inhibited from decreasing, without causing the coarsening of oxides.

Another invention which has been achieved in order to solve the problems is a welded structure including the weld metal. Since this welded structure includes the weld metal, creep rupture properties and toughness are obtained on a high level while attaining a reduction in holding period in PWHT.

Advantageous Effects of the Invention

As explained above, the weld metal and welded structure of the present invention are capable of attaining both creep rupture properties and toughness on a high level while shortening the holding period in PWHT.

Brief Description of the Drawings

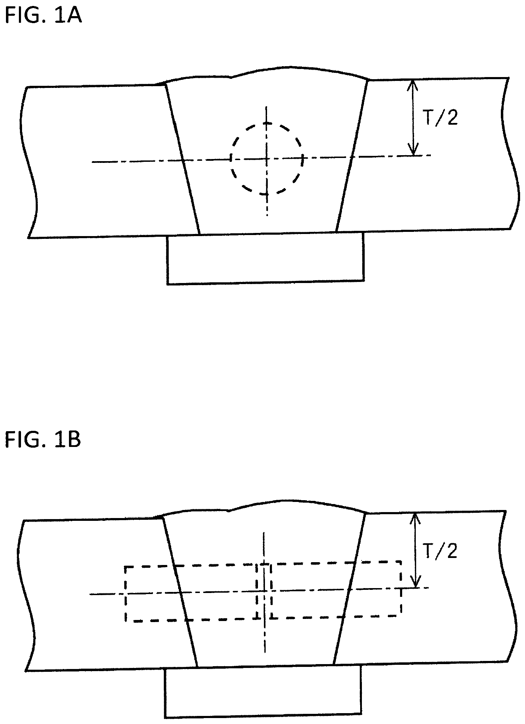

FIG. 1A is a schematic view illustrating a position from which a test specimen used for evaluating creep rupture properties in the Examples was taken.
FIG. 1B is a schematic view illustrating a position from which a test specimen used for evaluating toughness in the Examples was taken.

Modes for Carrying Out the Invention

Embodiments of the weld metal and welded structure according to the present invention are explained below.

[Weld Metal]

This weld metal has a composition including: C: 0.03 mass% or more and 0.16 mass% or less; Si: 0.10 mass% or more and 0.50 mass% or less; Mn: 0.10 mass% or more and 0.90 mass% or less; Ni: 0.02 mass% or more and 0.70 mass% or less; Cr: 7.0 mass% or more and 9.5 mass% or less; Mo: 0.80 mass% or more and 1.20 mass% or less; V: 0.05 mass% or more and 0.50 mass% or less; Nb: 0.010 mass% or more and 0.070 mass% or less; N: 0.010 mass% or more and 0.080 mass% or less; and O: more than 0 mass% and 0.10 mass% or less, with the remainder being Fe and unavoidable impurities, and a total concentration of Mn and Ni is 1.0 mass% or less, and an X value defined by the following formula (1) is larger than 0 and 15 or less:

$$X \text{ value} = (10 \times [P] + 5 \times [Sb] + 4 \times [Sn] + [As]) \times 100 \qquad (1)$$

wherein [P], [Sb], [Sn], and [As] are concentrations (mass%) of P, Sb, Sn, and As, as the unavoidable impurities, respectively.

C is an element which forms carbides and thereby improves the creep rupture properties. The lower limit of the C content in this weld metal is 0.03 mass%, preferably 0.04 mass%, more preferably 0.06 mass%. Meanwhile, the upper limit of the C content in the weld metal is 0.16 mass%, preferably 0.15 mass%, more preferably 0.13 mass%. In a case where the C content in the weld metal is less than the lower limit, there is a possibility that sufficient creep rupture properties might not be obtained. Conversely, in a case where the C content in the weld metal exceeds the upper limit, there is a possibility that carbides might coarsen, resulting in a decrease in toughness.

Si is an element which improves the creep rupture properties through solid-solution hardening. The lower limit of the Si content in this weld metal is 0.10 mass%, preferably 0.12 mass%, more preferably 0.15 mass%. Meanwhile, the upper limit of the Si content in the weld metal is 0.50 mass%, preferably 0.40 mass%, more preferably 0.35 mass%. In a case where the Si content in the weld metal is less than the lower limit, there is a possibility that sufficient creep rupture properties cannot be ensured. Conversely, in a case where the Si content in the weld metal exceeds the upper limit, there is the possibility of resulting in a decrease in toughness.

Mn is an element which improves the creep rupture properties through solid-solution hardening. The lower limit of the Mn content in this weld metal is 0.10 mass%, preferably 0.20 mass%, more preferably 0.30 mass%. Meanwhile, the upper limit of the Mn content in the weld metal is 0.90 mass%, preferably 0.85 mass%, more preferably 0.80 mass%. In a case where the Mn content in the weld metal is less than the lower limit, there is a possibility that sufficient creep rupture properties cannot be ensured. Conversely, in a case where the Mn content in the weld metal exceeds the upper limit, there is a possibility that the formation of ferrite bands during PWHT might be promoted.

Ni is an element which brings about a toughness-improving effect. The lower limit of the Ni content in this weld metal is 0.02 mass%, preferably 0.04 mass%, more preferably 0.06 mass%, even more preferably 0.08 mass%. Meanwhile, the upper limit of the Ni content in the weld metal is 0.70 mass%, preferably 0.65 mass%, more preferably 0.60 mass%. In a case where the Ni content in the weld metal is less than the lower limit, there is a possibility that sufficient toughness might not be obtained. Conversely, in a case where the Ni content in the weld metal exceeds the upper limit, there is a possibility that the MX might be made unstable at high temperatures under stress, resulting in a decrease in creep rupture property.

Cr is an element which forms $M_{23}C_6$ to thereby improve the creep rupture properties. The lower limit of the Cr content in this weld metal is 7.0 mass%, preferably 7.5 mass%, more preferably 7.8 mass%. Meanwhile, the upper limit of the Cr content in the weld metal is 9.5 mass%, preferably 9.0 mass%, more preferably 8.8 mass%, even more preferably 8.7 mass%. In a case where the Cr content in the weld metal is less than the lower limit, there is a possibility that sufficient creep rupture properties cannot be ensured. Conversely, in a case where the Cr content in the weld metal exceeds the upper limit, there is a possibility that the formation of δ ferrite might be promoted.

The lower limit of the Mo content in this weld metal is 0.80 mass%, preferably 0.85 mass%, more preferably 0.90 mass%. Meanwhile, the upper limit of the Mo content in the weld metal is 1.20 mass%, preferably 1.15 mass%, more preferably 1.10 mass%. In a case where the Mo content in the weld metal is less than the lower limit, there is the possibility of resulting in a decrease in creep rupture property. Conversely, in a case where the Mo content in the weld metal exceeds the upper limit, there is a possibility that the strength might increase excessively, making it impossible to ensure given toughness.

V is an element which forms MX to contribute to an improvement in creep rupture property. The lower limit of the V content in this weld metal is 0.05 mass%, preferably 0.10 mass%, more preferably 0.15 mass%. Meanwhile, the upper limit of the V content in the weld metal is 0.50 mass%, preferably 0.45 mass%, more preferably 0.40 mass%. In a case where the V content in the weld metal is less than the lower limit, there is a possibility that sufficient creep rupture properties might not be obtained. Conversely, in a case where the V content in the weld metal exceeds the upper limit, there is a possibility that the strength might increase excessively, making it impossible to ensure given toughness.

Nb is an element which forms MX to contribute to an improvement in creep rupture property. The lower limit of the Nb content in this weld metal is 0.010 mass%, preferably 0.015 mass%, more preferably 0.020 mass%. Meanwhile, the upper limit of the Nb content in the weld metal is 0.070 mass%, preferably 0.060 mass%, more preferably 0.055 mass%. In a case where the Nb content in the weld metal is less than the lower limit, there is a possibility that sufficient creep rupture properties might not be obtained. Conversely, in a case where the Nb content in the weld metal exceeds the upper limit, there is a possibility that the strength might increase excessively, making it impossible to ensure given toughness.

N is an element which forms MX to contribute to an improvement in creep rupture property. The lower limit of the N content in this weld metal is 0.010 mass%, preferably 0.015 mass%, more preferably 0.018 mass%. Meanwhile, the upper limit of the N content in the weld metal is 0.080 mass%, preferably 0.070 mass%, more preferably 0.060 mass%. In a case where the N content in the weld metal is less than the lower limit, there is a possibility that sufficient creep rupture properties might not be obtained. Conversely, in a case where the N content in the weld metal exceeds the upper limit, there is a possibility that the strength might increase excessively, making it impossible to ensure given toughness.

O is an element which forms oxides. The O content in this weld metal is higher than 0 mass%. The upper limit of the O content in the weld metal is 0.10 mass%, preferably 0.06 mass%, more preferably 0.05 mass%. In a case where the O content in the weld metal exceeds the upper limit, there is a possibility that coarse oxides might be formed in a larger amount to serve as starting points for brittle fracture, resulting in a decrease in toughness. By regulating the O concentration of the weld metal to 0.005 mass% or less, coarse oxides can be remarkably inhibited from increasing in number and the toughness is further enhanced. The lower the O content, the more the weld metal is preferred from the standpoint of ensuring the toughness. However, it is practically difficult to reduce the O content to 0 mass%.

Mn and Ni are elements which lower the reverse transformation temperature. The upper limit of the total concentration of Mn and Ni in this weld metal is 1.0 mass%, preferably 0.95 mass%, more preferably 0.90 mass%. In a case where the total concentration of Mn and Ni in the weld metal exceeds the upper limit, there is a possibility that the formation of ferrite bands during PWHT cannot be inhibited.

Besides containing the basic components described above, this weld metal contains Fe and unavoidable impurities as the remainder. Examples of permissible unavoidable impurities include elements such as P, Sb, Sn, As, Pb (lead), and the like which may be incorporated into the weld metal from, for example, starting materials, materials, production equipment, etc. It is also effective to positively incorporate other elements, and the properties of this weld metal are further improved in accordance with the kinds of elements incorporated.

For example, this weld metal may contain Co as one of the other elements. Co is an element which is effective in inhibiting the formation of δ ferrite. The Co content in the weld metal is preferably higher than 0 mass%, and the lower limit of the Co content is more preferably 0.1 mass%. Meanwhile, the upper limit of the Co content in the weld metal is preferably 0.5 mass%, more preferably 0.46 mass%, even more preferably 0.43 mass%. In a case where the Co content in the weld metal is less than the lower limit, there is a possibility that it might be difficult to inhibit the formation of δ ferrite. Conversely, in a case where the Co content in the weld metal exceeds the upper limit, there is a possibility that the strength might increase excessively, resulting in a decrease in toughness. In addition, there is a possibility that the formation of ferrite bands might be promoted, making it impossible to obtain the effect of sufficiently inhibiting the formation of ferrite bands.

Furthermore, this weld metal may contain W as one of the other elements. W is an element which is effective in improving the creep rupture properties. The W content in the weld metal is preferably higher than 0 mass%, and the lower limit of the W content is preferably 0.1 mass%. Meanwhile, the upper limit of the W content in the weld metal is preferably 0.5 mass%, more preferably 0.46 mass%, even more preferably 0.43 mass%. In a case where the W content in the weld metal is less than the lower limit, there is a possibility that it might be difficult to improve the creep rupture properties. Conversely, in a case where the W content in the weld metal exceeds the upper limit, there is a possibility that carbides precipitate as coarsened particles at grain boundaries, resulting in a decrease in toughness.

Moreover, this weld metal may contain Ti as one of the other elements. Ti is an element which forms MX to contribute to an improvement in creep rupture property. The Ti content in the weld metal is preferably higher than 0 mass%, and the lower limit of the Ti content is more preferably 0.005 mass%. Meanwhile, the upper limit of the Ti content in the weld metal is preferably 0.030 mass%, more preferably 0.024 mass%, even more preferably 0.018 mass%. In a case where the Ti content in the weld metal is less than the lower limit, there is a possibility that MX might be less apt to be formed, making it difficult to improve the creep rupture properties. Conversely, in a case where the Ti content in the weld metal exceeds the upper limit, there is a possibility that the strength might increase excessively, resulting in a decrease in toughness.

Furthermore, this weld metal may contain B as one of the other elements. B is an element which has the function of enabling $M_{23}C_6$ to be formed as finer particles and which thus improves the creep rupture properties. The B content in the weld metal is preferably higher than 0 mass%, and the lower limit of the B content is more preferably 0.0005 mass%. Meanwhile, the upper limit of the B content in the weld metal is preferably 0.0030 mass%, more preferably 0.0020 mass%, even more preferably 0.0012 mass%. In a case where the B content in the weld metal is less than the lower limit, there is a possibility that $M_{23}C_6$ might be less apt to be formed as finer particles, making it difficult to improve the creep rupture properties. Conversely, in a case where the B content in the weld metal exceeds the upper limit, there is a possibility that the strength might increase excessively, resulting in a decrease in toughness.

Furthermore, this weld metal may contain Cu as one of the other elements. Cu is an element which is effective in inhibiting the formation of δ ferrite. The Cu content in the weld metal is preferably higher than 0 mass%, and the lower limit of the Cu content is more preferably 0.05 mass%. Meanwhile, the upper limit of the Cu content in the weld metal is preferably 0.23 mass%, more preferably 0.20 mass%, even more preferably 0.15 mass%. In a case where the Cu content in the weld metal is less than the lower limit, there is a possibility that it might be difficult to inhibit the formation of δ ferrite. Conversely, in a case where the Cu content in the weld metal exceeds the upper limit, there is a possibility that the formation of ferrite bands might be promoted.

Furthermore, this weld metal may contain Al as one of the other elements. Al is a deoxidizing element. The Al content in the weld metal is preferably higher than 0 mass%, and the lower limit of the Al content is more preferably 0.005 mass%. Meanwhile, the upper limit of the Al content in the weld metal is preferably 0.050 mass%, more preferably 0.040 mass%, even more preferably 0.030 mass%. In a case where the Al content in the weld metal is less than the lower limit, there is a possibility that a sufficient deoxidizing effect might not be obtained. Conversely, in a case where the Al content in the weld metal exceeds the upper limit, there is a possibility that oxides might be coarsened, resulting in a decrease in toughness.

<Relational Expressions for Components>

In a case where the concentrations (mass%) of P, Sb, Sn, and As as the unavoidable impurities in the weld metal are expressed by [P], [Sb], [Sn], and [As], respectively, the degree in which these elements affect to reduce the toughness can be defined by the X value shown by the following formula (1), while taking account of the degree of the influence of each of these elements on the toughness. The upper limit of the X value is 15, preferably 12, more preferably 10. In a case where the X value exceeds the upper limit, there is a possibility that given toughness cannot be ensured. Since those elements are unavoidably incorporated into the weld metal, the X value exceeds 0.

$$\text{X value} = (10 \times [\text{P}] + 5 \times [\text{Sb}] + 4 \times [\text{Sn}] + [\text{As}]) \times 100 \qquad (1)$$

Meanwhile, the higher the concentration of the V that constitutes the MX precipitates, which have precipitated at high temperatures under stress during cooling after welding, and the lower the concentration of the V that remains in the matrix without constituting the MX precipitates, the more stably the MX particles are present. Because of this, in a case where the concentration of V and the concentration of compound-type V in this weld metal are expressed by [V] and [insol.V], respectively, then the degree in which the V affects to reduce the creep rupture properties can be evaluated in terms of the Y value shown by the following formula (2). The upper limit of the Y value is preferably 10, more preferably 5.0, even more preferably 4.5, especially preferably 4.0. By regulating the Y value so as to be not larger than the upper limit, the decrease in the number of MX particles which occurs at high temperatures under stress is inhibited and the creep rupture properties can be further improved.

$$\text{Y value} = ([\text{V}] - [\text{insol.V}]) / [\text{insol.V}] \qquad (2)$$

<Welding Methods>

As a welding method for obtaining this weld metal, any arc welding method may be used without particular limitations. Use can be made of SMAW (shielded metal arc welding), GTAW (gas tungsten arc welding), SAW (submerged arc welding), GMAW (gas metal arc welding), FCAW (flux cored arc welding), or the like. The power supply for use in the welding may be either direct-current or alternating-current.

It is, however, necessary for achieving this weld metal that a welding material and welding conditions should be suitably controlled. A welding material composition is, of course, restricted by a required weld metal composition. Furthermore, welding conditions and a welding material composition must be suitably controlled in order to obtain given carbide forms.

Preferred welding conditions in, for example, SMAW are as follows. First, the lower limit of the heat input is preferably 2.0 kJ/mm, more preferably 2.1 kJ/mm. Meanwhile, the upper limit of the heat input is preferably 3.5 kJ/mm, more preferably 3.0 kJ/mm. In a case where the heat input is less than the lower limit, there is a possibility that the cooling rate during the welding might be so high that carbides are not formed in a sufficient amount during the cooling. Conversely, in a case where the heat input exceeds the upper limit, there is a possibility that the cooling rate during the welding might be so low that the formation of cementite in a final stage of the cooling is promoted, resulting in a decrease in the formation of MX precipitates.

The lower limit of the preheating temperature and interpass temperature in SMAW is preferably 160°C, more preferably 180°C. Meanwhile, the upper limit of the preheating temperature and interpass temperature is preferably 260°C, more preferably 250°C. In a case where the preheating temperature and the interpass temperature are lower than the lower limit, there is a possibility that the cooling rate during the welding might be so high that carbides are not formed in a sufficient amount during the cooling. In particular, in a case where the preheating temperature and the interpass temperature are regulated to 180°C or higher, it becomes easy to control the Y value so as to be within the range shown above. Conversely, in a case where the preheating temperature and the interpass temperature exceeds the upper limit, there is a possibility that the cooling rate during the welding might be so low that the formation of cementite in a final stage of the cooling is promoted, resulting in a decrease in the formation of MX precipitates.

The lower limit of the holding temperature in a PWHT is preferably 750°C, more preferably 755°C. Meanwhile, the upper limit of the holding temperature in the PWHT is preferably 770°C, more preferably 765°C. In a case where the holding temperature in the PWHT is lower than the lower limit, there is a possibility that the PWHT might require too long a holding period, resulting in a decrease in construction efficiency. Conversely, in a case where the holding temperature in the PWHT exceeds the upper limit, there is a possibility that ferrite bands might be prone to be formed, making it impossible to obtain given creep rupture properties or toughness.

The lower limit of the holding period in the PWHT is preferably 2 hours, more preferably 3 hours. Meanwhile, the upper limit of the holding period in the PWHT is preferably 40 hours, more preferably 35 hours. In a case where the holding period in the PWHT is shorter than the lower limit, there is a possibility that the stress which is generated during the welding cannot be sufficiently removed. Conversely, in a case where the holding period in the PWHT exceeds the upper limit, there is a possibility that a sufficiently high construction efficiency might not be obtained.

By performing welding and the PWHT under such conditions, a weld metal which can have both creep rupture properties and toughness on a high level can be formed.

[Welded Structure]

This welded structure includes the weld metal. When producing, for example, a boiler for use in ultra supercritical coal-fired thermal power generation, this welded structure, which includes the weld metal, is obtained by welding given members under the welding conditions shown above. Since this welded structure includes the weld metal, creep rupture properties and toughness can be ensured on a high level while attaining a reduction in holding period in PWHT. As a result, devices to be used in high-temperature high-pressure environments, such as boilers for ultra supercritical coal-fired thermal power generation, are improved in terms of reliability, durability, etc.

<Advantages>

In this weld metal, since the total concentration of Mn and Ni therein is not higher than the upper limit, the reverse transformation temperature can be lowered to inhibit the formation of $\delta$ ferrite and ferrite bands, while enabling a PWHT to be performed at a high temperature. Thus, this weld metal has advantages in that the holding period in the PWHT can be shortened and that the weld metal can have both creep rupture properties and toughness on a high level.

In addition, since the X value, which is an index to the degree of influence on toughness decrease and which is determined using as variables the proportions by mass of elements in this weld metal, is regulated so as to be not larger than the upper limit, high toughness can be ensured.

Examples

The present invention will be explained below in more detail by reference to Examples, but the present invention should not be construed as being limited to the following Examples.

Base materials containing the components shown in Table 1 were used to produce weld metals under the welding conditions described below, and the weld metals were evaluated for various properties.

[Table 1]

| Component contents in base material (mass%) | | | | | | | | | | |
|---|---|---|---|---|---|---|---|---|---|---|
| C | Si | Mn | P | S | Ni | Cr | Mo | V | Nb | N |
| 0.100 | 0.26 | 0.51 | 0.010 | 0.0006 | 0.33 | 8.90 | 0.95 | 0.21 | 0.070 | 0.090 |

[Welding Conditions 1]

Weld metals No. 1 to No. 27 and No. 29 to No. 44 shown in Table 2 were obtained by SMAW under the following welding conditions. Using base materials each having an average thickness of 20 mm, the weld metals were produced under the conditions of: a V-shaped groove angle of 20°; root gap of 16 mm; welding position, flat; diameter of 4.0 mm; heat input conditions of about 2.2 kJ/mm, 150 A - 24 V, 8 to 12 cm/min; preheating temperature and interpass temperature, 160 to 250°C; and build-up method, one-layer two passes. Furthermore, the weld metals thus produced were subjected to a heat treatment, as a PWHT, under the conditions of a holding temperature of 760°C and a holding period of 4 to 32 hours. The welding conditions used for each of the weld metals thus produced are as shown in Table 2.

[Welding Conditions 2]

Weld metal No. 28 shown in Table 2 was obtained by GTAW under the following welding conditions. Using base materials each having an average thickness of 13 mm, the weld metal was produced under the conditions of: a V-shaped groove angle of 45°; root gap of 6.5 mm; welding position, flat; wire diameter of 1.6 mm; heat input conditions of 1.7 kJ/mm, 230 A - 12 V, 10 cm/min; preheating temperature and interpass temperature, 240°C; and build-up method, one-layer two passes. Furthermore, the weld metal thus produced was subjected to a heat treatment, as a PWHT, under the conditions of a holding temperature of 760°C and a holding period of 4 hours.

<Determination of Component Contents>

A sample for determination of component contents was cut out of a central part of each weld metal formed in the groove after the PWHT, and was subjected to analyses for chemical components. Specifically, analysis for B was made by absorption photometry, analysis for C was made by a combustion-infrared absorption method, analysis for N and O was made by an inert gas fusion-thermal conductivity method, and analysis for elements other than B, C, N, and O was made by inductively coupled plasma emission spectrophotometry. In Table 2, the contents of component elements obtained for each weld metal are shown. In Table 2, each "-" indicates that the component was not contained.

<Determination of Concentration of Compound-type V>

First, a thickness-direction central part of each weld metal formed in the groove after the PWHT was electrolytically extracted with a 10 vol% acetylacetone and 1 vol% tetramethylammonium chloride solution in methanol. Subsequently, the solution obtained by the electrolytic extraction was filtered with a filter having an average pore size of 0.1 $\mu$m to obtain a residue. Thereafter, this residue was subjected to analysis for chemical components by inductively coupled plasma emission spectrophotometry to determine the concentration of compound-type V. This compound-type V concentration [insol. V] and the V concentration [V] obtained in the Determination of Component Contents were substituted into formula (2) to determine a Y value, which is shown in Table 2.

<Examination for $\delta$ Ferrite>

A test specimen was taken from each weld metal which had undergone the welding, so that a surface perpendicular to the welding direction was able to be examined. This test specimen was corroded with a ferric-chloride etchant, and the structure thereof was examined with an optical microscope at a magnification of 400 times. The specimens in which $\delta$ ferrite was not observed at all were rated as "A", and the specimen in which $\delta$ ferrite was observed was rated as "B". The results of the evaluation of each weld metal are shown in Table 2.

<Examination for Ferrite Bands>

A test specimen was taken from each weld metal which had undergone the PWHT, so that a surface perpendicular to the welding direction was able to be examined. This test specimen was corroded with a ferric-chloride etchant, and the structure thereof was examined with an optical microscope at a magnification of 400 times. The specimens in which no ferrite band was observed at all were rated as "A", and the specimens in which ferrite bands were observed were rated as "B". The results of the evaluation of each weld metal are shown in Table 2.

<Evaluation of Creep Rupture Properties>

Creep rupture properties were evaluated in the following manner. A creep test specimen having a gage length of 30 mm and a diameter of 6.0 mm was taken along the welding line direction from a plate-thickness central part of each weld metal that had undergone the PWHT, as shown in FIG. 1A. This test specimen was subjected to a creep test under the conditions of 650°C and 100 MPa in accordance with JIS-Z 2271 (2010). The test specimens each had a rupture time exceeding 600 hours in this test can be regarded as having satisfactory creep rupture properties. T in FIG. 1A indicates the thickness of each base material.

<Evaluation of Toughness>

Toughness was evaluated in the following manner. A No. 4 V-notched test specimen according to JIS-Z 3111 (2005) was taken as a Charpy impact test specimen, along the direction perpendicular to the welding line direction, from a plate-thickness central part of each weld metal which had undergone the PWHT. This test specimen was subjected to a Charpy impact test at 20°C in accordance with JIS-Z 2242 (2005). The weld metals which each had an absorbed energy vE of 70 J or higher in terms of average for three measurements (n = 3) in this test can be regarded as having satisfactory toughness. T in FIG. 1B indicates the thickness of each base material.

[Table 2]

| No. | Pre-heating / inter-pass temperature (°C) | PWHT (hr) | Component contents (mass%) | | | | | | | | | | | X value |
| --- | --- | --- | --- | --- | --- | --- | --- | --- | --- | --- | --- | --- | --- | --- |
| | | | C | Si | Mn | Ni | Cr | Mo | V | Nb | N | O | Mn+Ni | |
| 1 | 160 | 4 | 0.06 | 0.25 | 0.55 | 0.17 | 8.0 | 1.12 | 0.19 | 0.057 | 0.024 | 0.040 | 0.72 | 6.8 |
| 2 | 160 | 4 | 0.04 | 0.20 | 0.62 | 0.22 | 7.7 | 0.88 | 0.34 | 0.033 | 0.022 | 0.041 | 0.84 | 7.1 |
| 3 | 160 | 4 | 0.09 | 0.33 | 0.49 | 0.45 | 8.2 | 1.05 | 0.37 | 0.041 | 0.028 | 0.035 | 0.94 | 4.8 |
| 4 | 160 | 4 | 0.05 | 0.18 | 0.81 | 0.05 | 8.3 | 1.03 | 0.30 | 0.019 | 0.031 | 0.025 | 0.86 | 8.2 |
| 5 | 170 | 4 | 0.06 | 0.20 | 0.77 | 0.12 | 7.9 | 0.94 | 0.34 | 0.023 | 0.022 | 0.048 | 0.89 | 5.2 |
| 6 | 180 | 4 | 0.09 | 0.28 | 0.60 | 0.33 | 8.1 | 1.03 | 0.15 | 0.035 | 0.025 | 0.029 | 0.93 | 9.8 |
| 7 | 200 | 4 | 0.10 | 0.27 | 0.71 | 0.09 | 8.6 | 1.08 | 0.27 | 0.042 | 0.030 | 0.039 | 0.80 | 7.9 |
| 8 | 250 | 8 | 0.11 | 0.25 | 0.65 | 0.11 | 8.2 | 1.02 | 0.25 | 0.039 | 0.029 | 0.040 | 0.76 | 8.0 |
| 9 | 240 | 4 | 0.12 | 0.15 | 0.24 | 0.61 | 8.0 | 1.11 | 0.28 | 0.048 | 0.017 | 0.027 | 0.85 | 4.2 |
| 10 | 200 | 16 | 0.16 | 0.37 | 0.49 | 0.45 | 8.0 | 1.00 | 0.24 | 0.035 | 0.022 | 0.036 | 0.94 | 5.3 |
| 11 | 220 | 8 | 0.03 | 0.30 | 0.61 | 0.10 | 8.5 | 0.91 | 0.10 | 0.030 | 0.038 | 0.040 | 0.71 | 7.1 |
| 12 | 220 | 4 | 0.08 | 0.11 | 0.55 | 0.07 | 8.8 | 1.05 | 0.11 | 0.039 | 0.042 | 0.025 | 0.62 | 6.5 |
| 13 | 220 | 4 | 0.10 | 0.47 | 0.22 | 0.57 | 8.7 | 1.05 | 0.28 | 0.018 | 0.055 | 0.039 | 0.79 | 6.6 |
| 14 | 220 | 24 | 0.12 | 0.27 | 0.12 | 0.61 | 8.3 | 1.04 | 0.39 | 0.016 | 0.031 | 0.088 | 0.73 | 7.8 |
| 15 | 240 | 4 | 0.14 | 0.21 | 0.86 | 0.07 | 8.3 | 1.13 | 0.25 | 0.024 | 0.064 | 0.038 | 0.93 | 11.5 |
| 16 | 230 | 4 | 0.04 | 0.28 | 0.48 | 0.03 | 8.0 | 0.83 | 0.29 | 0.038 | 0.028 | 0.031 | 0.51 | 4.9 |
| 17 | 230 | 4 | 0.10 | 0.24 | 0.65 | 0.29 | 8.1 | 0.90 | 0.28 | 0.046 | 0.033 | 0.037 | 0.94 | 8.1 |
| 18 | 230 | 4 | 0.10 | 0.26 | 0.69 | 0.20 | 8.2 | 0.86 | 0.25 | 0.039 | 0.042 | 0.044 | 0.89 | 9.0 |
| 19 | 230 | 4 | 0.08 | 0.33 | 0.22 | 0.66 | 7.7 | 1.18 | 0.31 | 0.041 | 0.042 | 0.028 | 0.88 | 6.6 |
| 20 | 250 | 32 | 0.10 | 0.20 | 0.72 | 0.12 | 7.2 | 1.00 | 0.16 | 0.040 | 0.035 | 0.033 | 0.84 | 14.3 |
| 21 | 220 | 4 | 0.10 | 0.27 | 0.82 | 0.10 | 9.3 | 1.14 | 0.12 | 0.040 | 0.034 | 0.058 | 0.92 | 6.8 |
| 22 | 220 | 4 | 0.09 | 0.25 | 0.67 | 0.15 | 8.1 | 1.04 | 0.08 | 0.042 | 0.036 | 0.042 | 0.82 | 5.1 |

[Table 2 continued]

| No. | Component contents (mass%) | | | | | | Y value | δ ferrite | Ferrite bands | Rupture time (hr) | vE (J) |
|---|---|---|---|---|---|---|---|---|---|---|---|
| | Co | W | Ti | B | Cu | Al | | | | | |
| 1 | - | - | - | - | - | - | 12.6 | A | A | 630 | 82 |
| 2 | - | - | - | - | - | - | 14.5 | A | A | 627 | 86 |
| 3 | 0.22 | - | - | - | - | - | 15.1 | A | A | 644 | 80 |
| 4 | - | 0.21 | - | - | - | - | 11.0 | A | A | 659 | 85 |
| 5 | - | - | - | - | - | - | 8.7 | A | A | 656 | 85 |
| 6 | - | - | - | - | - | 0.012 | 2.8 | A | A | 688 | 81 |
| 7 | - | - | - | 0.0012 | - | - | 4.4 | A | A | 694 | 81 |
| 8 | - | - | - | - | - | - | 3.9 | A | A | 677 | 80 |
| 9 | - | - | - | - | - | 0.033 | 3.0 | A | A | 705 | 82 |
| 10 | - | - | - | - | - | - | 2.4 | A | A | 993 | 72 |
| 11 | 0.41 | - | - | - | - | - | 3.8 | A | A | 628 | 92 |
| 12 | - | - | - | - | - | 0.046 | 1.5 | A | A | 614 | 75 |
| 13 | - | 0.48 | - | - | 0.02 | - | 3.6 | A | A | 893 | 74 |
| 14 | - | - | - | - | - | 0.001 | 4.1 | A | A | 611 | 76 |
| 15 | - | - | - | - | 0.11 | - | 3.2 | A | A | 641 | 77 |
| 16 | - | - | - | - | 0.22 | - | 3.8 | A | A | 639 | 71 |
| 17 | - | - | - | - | - | - | 4.5 | A | A | 692 | 86 |
| 18 | - | - | 0.004 | - | - | - | 4.4 | A | A | 689 | 82 |
| 19 | 0.1 | - | - | - | - | - | 2.8 | A | A | 611 | 82 |
| 20 | - | - | - | 0.0008 | - | - | 3.4 | A | A | 684 | 79 |
| 21 | - | - | 0.022 | - | - | - | 1.7 | A | A | 803 | 78 |
| 22 | - | 0.08 | - | - | - | - | 2.1 | A | A | 622 | 83 |

[Table 2 continued]

| No. | Pre-heating / inter-pass temperature (°C) | PWHT (hr) | Component contents (mass%) | | | | | | | | | | | X value |
|---|---|---|---|---|---|---|---|---|---|---|---|---|---|---|
| | | | C | Si | Mn | Ni | Cr | Mo | V | Nb | N | O | Mn+Ni | |
| 23 | 220 | 4 | 0.05 | 0.25 | 0.75 | 0.19 | 8.0 | 1.07 | 0.48 | 0.038 | 0.031 | 0.041 | 0.94 | 7.3 |
| 24 | 230 | 4 | 0.13 | 0.24 | 0.60 | 0.24 | 7.9 | 1.08 | 0.19 | 0.011 | 0.028 | 0.038 | 0.84 | 5.9 |
| 25 | 220 | 4 | 0.14 | 0.21 | 0.57 | 0.40 | 8.0 | 0.95 | 0.24 | 0.068 | 0.038 | 0.046 | 0.97 | 6.4 |
| 26 | 240 | 4 | 0.07 | 0.28 | 0.71 | 0.15 | 8.2 | 0.89 | 0.20 | 0.041 | 0.012 | 0.036 | 0.86 | 6.4 |
| 27 | 250 | 4 | 0.13 | 0.33 | 0.34 | 0.32 | 8.5 | 1.01 | 0.20 | 0.041 | 0.077 | 0.030 | 0.66 | 5.8 |
| 28 | 240 | 4 | 0.12 | 0.31 | 0.58 | 0.34 | 8.5 | 0.98 | 0.21 | 0.044 | 0.032 | 0.004 | 0.92 | 6.7 |
| 29 | 220 | 4 | 0.17 | 0.20 | 0.70 | 0.18 | 8.8 | 1.02 | 0.25 | 0.040 | 0.051 | 0.031 | 0.88 | 5.3 |
| 30 | 220 | 4 | 0.02 | 0.20 | 0.47 | 0.21 | 8.6 | 1.09 | 0.33 | 0.028 | 0.023 | 0.032 | 0.68 | 6.9 |
| 31 | 220 | 4 | 0.11 | 0.08 | 0.31 | 0.44 | 8.0 | 1.06 | 0.28 | 0.024 | 0.027 | 0.112 | 0.75 | 7.1 |
| 32 | 230 | 4 | 0.11 | 0.52 | 0.55 | 0.30 | 8.1 | 0.75 | 0.24 | 0.039 | 0.030 | 0.050 | 0.85 | 8.8 |
| 33 | 240 | 4 | 0.10 | 0.28 | 0.07 | 0.48 | 7.7 | 1.00 | 0.27 | 0.015 | 0.029 | 0.029 | 0.55 | 15.2 |
| 34 | 230 | 4 | 0.12 | 0.26 | 0.93 | 0.06 | 8.0 | 1.04 | 0.54 | 0.022 | 0.030 | 0.031 | 0.99 | 4.9 |
| 35 | 250 | 4 | 0.09 | 0.26 | 0.58 | 0.01 | 8.0 | 1.05 | 0.27 | 0.005 | 0.027 | 0.032 | 0.59 | 5.2 |
| 36 | 240 | 4 | 0.05 | 0.29 | 0.22 | 0.71 | 8.4 | 1.02 | 0.29 | 0.029 | 0.024 | 0.033 | 0.93 | 5.8 |
| 37 | 250 | 4 | 0.04 | 0.20 | 0.44 | 0.21 | 6.8 | 1.22 | 0.29 | 0.024 | 0.026 | 0.036 | 0.65 | 7.1 |
| 38 | 230 | 4 | 0.05 | 0.25 | 0.72 | 0.08 | 9.6 | 0.97 | 0.03 | 0.024 | 0.035 | 0.038 | 0.80 | 6.8 |
| 39 | 220 | 4 | 0.09 | 0.33 | 0.56 | 0.31 | 8.9 | 0.96 | 0.19 | 0.071 | 0.008 | 0.038 | 0.87 | 6.6 |
| 40 | 240 | 4 | 0.05 | 0.31 | 0.49 | 0.17 | 8.6 | 1.02 | 0.27 | 0.026 | 0.081 | 0.038 | 0.66 | 5.9 |
| 41 | 220 | 4 | 0.06 | 0.28 | 0.51 | 0.51 | 7.7 | 1.05 | 0.22 | 0.024 | 0.036 | 0.037 | 1.02 | 8.3 |
| 42 | 220 | 4 | 0.10 | 0.25 | 0.61 | 0.22 | 8.1 | 1.06 | 0.20 | 0.018 | 0.024 | 0.036 | 0.83 | 7.2 |
| 43 | 220 | 4 | 0.10 | 0.28 | 0.64 | 0.18 | 8.0 | 0.96 | 0.21 | 0.033 | 0.028 | 0.034 | 0.82 | 5.9 |
| 44 | 220 | 4 | 0.11 | 0.29 | 0.72 | 0.31 | 8.6 | 1.00 | 0.13 | 0.042 | 0.040 | 0.021 | 1.03 | 6.6 |

[Table 2 continued]

| No. | Component contents (mass%) | | | | | | Y value | δ ferrite | Ferrite bands | Rupture time (hr) | vE (J) |
|---|---|---|---|---|---|---|---|---|---|---|---|
| | Co | W | Ti | B | Cu | Al | | | | | |
| 23 | 0.48 | - | - | 0.0012 | - | - | 4.9 | A | A | 874 | 72 |
| 24 | - | - | - | 0.0025 | - | - | 4.3 | A | A | 699 | 72 |
| 25 | - | - | 0.011 | - | - | - | 4.3 | A | A | 790 | 70 |
| 26 | - | - | - | - | - | - | 3.9 | A | A | 640 | 94 |
| 27 | - | - | 0.027 | - | - | - | 3.7 | A | A | 833 | 73 |
| 28 | - | - | - | - | - | - | 3.6 | A | A | 921 | 120 |
| 29 | - | - | - | - | - | - | 4.8 | A | A | 1022 | 53 |
| 30 | 0.52 | - | - | - | - | - | 4.7 | A | A | 588 | 55 |
| 31 | - | - | - | - | - | - | 4.7 | A | A | 541 | 59 |
| 32 | - | - | - | - | - | - | 3.3 | A | A | 549 | 44 |
| 33 | - | - | - | - | - | - | 3.9 | A | A | 532 | 68 |
| 34 | - | - | - | - | - | - | 6.3 | A | B | 633 | 33 |
| 35 | - | - | - | - | - | - | 4.6 | A | A | 490 | 66 |
| 36 | - | - | - | - | - | - | 4.1 | B | B | 593 | 72 |
| 37 | - | - | - | - | - | - | 3.8 | A | A | 510 | 44 |
| 38 | - | - | - | - | - | - | 2.8 | A | A | 560 | 74 |
| 39 | - | - | - | - | - | - | 4.4 | A | A | 577 | 30 |
| 40 | - | 0.52 | - | - | - | - | 2.8 | A | A | 818 | 33 |
| 41 | - | - | - | - | - | - | 1.8 | A | B | 643 | 78 |
| 42 | - | - | 0.033 | - | - | - | 2.4 | A | A | 860 | 49 |
| 43 | - | - | - | 0.0033 | - | - | 3.9 | A | A | 721 | 50 |
| 44 | - | - | - | - | 0.25 | 0.051 | 3.6 | A | B | 622 | 40 |

<Measurement Results>

It can be seen from Table 2 that each of No. 1 to No. 28 satisfied the component content ranges according to the present invention and had an X value of 15 or less, and had a rupture time exceeding 600 hours and an absorbed energy vE of 70 J or higher, showing that these weld metals are capable of having both creep rupture properties and toughness on a high level. In each of No. 1 to No. 28, neither δ ferrite nor ferrite bands were observed. It can hence be considered that although a PWHT was performed at a holding temperature as high as 760°C, the formation of δ ferrite and ferrite bands was inhibited and that both creep rupture properties and toughness can hence be attained on a high level.

In contrast, No. 29 to No. 40 and No. 42 to No. 44, in which any of the components did not satisfy the component content ranges according to the present invention, each had a rupture time less than 600 hours or an absorbed energy vE less than 70 J. It can hence be seen that sufficient creep rupture properties or sufficient toughness is not obtained.

Meanwhile, in No. 41, in which the total concentration of Mn and Ni did not satisfy the requirement according to the present invention, ferrite bands were observed. This is thought to be due to the too high total concentration of Mn and Ni. It can be assumed that the weld metal No. 41 is hence prone to rupture or break.

A comparison in Table 2 between Nos. 1, 2, 5, 8, 10, 17, and 26, each of which contained none of Co, W, Ti, B, Cu, and Al, shows that although these weld metals each had a rupture time exceeding 600 hours, Nos. 5, 8, 10, 17, and 26 showed longer rupture times than the cases of No. 1 and No. 2. The Y values in No. 1 and No. 2, which are defined by the formula (2), each exceeded 10, whereas those in Nos. 5, 8, 10, 17, and 26 were 10 or less. It can hence be seen that by regulating the Y value to 10 or less, the creep rupture properties can be improved. Of these, No. 10 showed a rupture time of 993 hours, which was far longer than the rupture times of the other weld metals, i.e., Nos. 1, 2, 5, 8, 17, and 26. This is thought to be because No. 10 not only had a smaller Y value than the other weld metals but also had a relatively high C content and, hence, the degree of influence in reducing the creep rupture properties was lower therein.

Meanwhile, No. 28 had an absorbed energy vE of 120 J, which was far higher than the absorbed energy vE values of the other weld metals, i.e., No. 1 to No. 27 and No. 29 to No. 44. This is thought to be because each of the weld metals other than No. 28 had an O content of 0.02 mass% or higher, whereas No. 28 had a far lower O content of 0.004 mass%. Furthermore, it is considered that GTAW is a welding method which is more apt to reduce the O content and to improve the toughness than SMAW.

While the present invention has been described in detail and with reference to specific embodiments thereof, it will be apparent to one skilled in the art that various changes and modifications can be made therein without departing from the spirit and scope thereof.

This application is based on a Japanese Patent Application No. 2015-018868 filed on February 2, 2015, the contents of which are incorporated herein by reference.

Industrial Applicability

As explained above, the weld metal and the welded structure are suitable for use in or as the boiler tubes and pipes for ultra supercritical coal-fired thermal power generation which are required to have high heat resistance, since both creep rupture properties and toughness can be attained on a high level while attaining a reduction in holding time in PWHT.

Description of Reference Numerals and Signs

T:    Thickness

**Claims**

1.  A weld metal having a composition, comprising:

    C: 0.03 mass% or more and 0.16 mass% or less;
    Si: 0.10 mass% or more and 0.50 mass% or less;
    Mn: 0.10 mass% or more and 0.90 mass% or less;
    Ni: 0.02 mass% or more and 0.70 mass% or less;
    Cr: 7.0 mass% or more and 9.5 mass% or less;
    Mo: 0.80 mass% or more and 1.20 mass% or less;
    V: 0.05 mass% or more and 0.50 mass% or less;
    Nb: 0.010 mass% or more and 0.070 mass% or less;
    N: 0.010 mass% or more and 0.080 mass% or less; and
    O: more than 0 mass% and 0.10 mass% or less,
    with the remainder being Fe and unavoidable impurities,
    wherein a total concentration of Mn and Ni is 1.0 mass% or less, and
    an X value defined by the following formula (1) is larger than 0 and 15 or less:

    $$\text{X value} = (10 \times [P] + 5 \times [Sb] + 4 \times [Sn] + [As]) \times 100 \qquad (1)$$

    wherein [P], [Sb], [Sn], and [As] are concentrations (mass%) of P, Sb, Sn, and As, as the unavoidable impurities, respectively.

2.  The weld metal according to claim 1, which has an O concentration of 0.005 mass% or less.

3.  The weld metal according to claim 1 or 2, wherein a Y value defined by the following formula (2) is 10 or less:

    $$\text{Y value} = ([V] - [\text{insol.V}]) / [\text{insol.V}] \qquad (2)$$

14

wherein [V] is a concentration of V, and [insol.V] is a concentration of compound-type V.

4. The weld metal according to claim 1, further comprising at least one of the following (a) and (b):

(a) at least one of Co: more than 0 mass% and 0.5 mass% or less; W: more than 0 mass% and 0.5 mass% or less; Ti: more than 0 mass% and 0.030 mass% or less; and B: more than 0 mass% and 0.0030 mass% or less; and
(b) at least one of Cu: more than 0 mass% and 0.23 mass% or less; and Al: more than 0 mass% and 0.050 mass% or less.

5. A welded structure comprising the weld metal according to claim 1.

FIG. 1A

FIG. 1B

## INTERNATIONAL SEARCH REPORT

| International application No. |
| --- |
| PCT/JP2016/052468 |

A. CLASSIFICATION OF SUBJECT MATTER
*C22C38/00*(2006.01)i, *B23K35/30*(2006.01)i, *C22C38/48*(2006.01)i, *C22C38/54* (2006.01)i

According to International Patent Classification (IPC) or to both national classification and IPC

B. FIELDS SEARCHED

Minimum documentation searched (classification system followed by classification symbols)
C22C38/00, B23K35/30, C22C38/48, C22C38/54

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2005-329415 A  (Kobe Steel, Ltd.),<br>02 December 2005 (02.12.2005),<br>claims 1 to 5; paragraphs [0022] to [0038],<br>[0048] to [0049], [0054], [0056]<br>& US 2005/0257853 A1<br>claims 1 to 5; paragraphs [0087] to [0088],<br>[0092], [0094]<br>& CN 1727108 A | 4<br>1-3,5 |
| Y<br>A | JP 2004-100027 A  (Nippon Steel Corp.),<br>02 April 2004 (02.04.2004),<br>claim 1; paragraphs [0024], [0040] to [0043],<br>[0046]<br>(Family: none) | 4<br>1-3,5 |

| ☒  Further documents are listed in the continuation of Box C. | ☐  See patent family annex. |
| --- | --- |

*    Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>29 March 2016 (29.03.16) | Date of mailing of the international search report<br>12 April 2016 (12.04.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/052468

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2014-147969 A  (Kobe Steel, Ltd.),<br>21 August 2014 (21.08.2014),<br>claim 1; paragraph [0012]<br>& US 2016/0002758 A1<br>claim 1; paragraphs [0026] to [0028]<br>& EP 2952286 A1<br>claim 1; paragraph [0020]<br>& CN 105008088 A<br>& KR 10-2015-0103226 A | 3 |

Form PCT/ISA/210 (continuation of second sheet) (January 2015)

**REFERENCES CITED IN THE DESCRIPTION**

**Patent documents cited in the description**

- JP 2007290016 A
- JP H08187592 A
- JP H06238480 A
- JP H07268562 A
- JP 2015018868 A

**Non-patent literature cited in the description**

- **ROBERT BRUSCATO.** *The Welding Journal,* 1970, vol. 49 (4), 148s-156s